# EUROPEAN PATENT APPLICATION

(11) **EP 2 323 134 A1**
(43) Date of publication of application: **18.05.2011**
(21) Application number: 10169577.3
(22) Date of filing: 14.07.2010
(51) Int. Cl.: G11B 27/10, G11B 27/34, G06F 17/30, G06F 3/048

(54) **Methods and electronic devices for previewing videos**

(30) Priority: 06.11.2009 US 258804 P
(71) Applicant: Research In Motion Limited, Waterloo, ON N2L 3W8 (CA)
(72) Inventor: Sircar, Shiladitya, Kanata Ontario K2K 2A5 (CA); Zhou, Lin Mike, Kanata Ontario K2K 2A5 (CA); Haque, Shadid, Waterloo Ontario N2V 1K8 (CA)
(74) Representative: Rickard, David John

(57) **Abstract**

According to one aspect, an electronic device having a display for presenting a cursor and a graphic representation corresponding to a video. The electronic device also includes a selection mechanism for moving the cursor on the display, and a processor for detecting a presence of the cursor in a vicinity of the graphic representation on the display. The processor is further adapted to, upon detection of the presence of the cursor in the vicinity of the graphic representation on the display, play the video with a video player.

## Description

Implementations herein relate generally to previewing of videos, and more particularly to methods and electronic devices for automatically previewing videos.

Various electronic devices are used to take and store multimedia data, such as text, audio, still pictures or videos, and various combinations thereof. On a display of some electronic devices, a thumbnail may be presented as a graphic representation corresponding to multimedia data. Users of the electronic devices may access or play or otherwise manipulate the multimedia data by taking some action in relation to the thumbnail (e.g. by selecting or "left-clicking" on the thumbnail using a mouse).

Thumbnails are typically presented as still pictures such as photographs, drawings or icons. In the case of multimedia data that includes video, a thumbnail may be a small picture or image, which may be taken from the video itself (e.g. the thumbnail may be a frame from the video).

In some cases, thumbnails may be, but need not be, accompanied by or otherwise associated with metadata. Metadata may include or represent information associated with a particular multimedia item, and may include elements such as a file name, a date of creation, author information, geographic information relevant to the multimedia data, cost information, and so on.

In the case of a video represented by a thumbnail (e.g. a still picture taken from the video), it may be difficult to identify a video of interest based only on that thumbnail or the associated metadata (e.g. the file name). For example, the still picture might not be meaningful or representative of the video. Furthermore, the metadata might not be meaningful or representative of the video.

### GENERAL

Generally, the concepts described herein are directed to graphic representations corresponding to multimedia data. In particular, some of the concepts herein pertain to thumbnails for videos that may be more meaningful or may be better representative of videos.

In one broad aspect, implementations herein may relate to a method comprising presenting a graphic representation corresponding to a video on a display, detecting a presence of a cursor in a vicinity of the graphic representation, and playing the video. In some implementations, the video may be played without the cursor being used to select the graphic representation (e.g. without selecting or "left-clicking" on the graphic representation).

In another broad aspect, implementations herein may relate to an electronic device for previewing one or more videos. The electronic device may include a selection mechanism, a display and a processor. The selection mechanism may be adapted for moving a cursor. The display may be configured to display a graphic representation corresponding to a video and to the cursor. The processor may detect a presence of the cursor in a vicinity of the graphic representation on the display, and upon detection of the presence of the cursor in the vicinity of the graphic representation on the display, play the video with a video player or another suitable media playing component. Generally, the video player may be adapted for playing the video. In some implementations, the video may be played without the cursor selecting (e.g. clicking on) the graphic representation.

### BRIEF DESCRIPTION OF THE DRAWINGS

For a better understanding of implementations described herein, and to show how they may be carried into effect, reference will now be made, by way of example, to the accompanying drawings.

Figure 1 is a schematic representation of an electronic device for previewing videos according to one implementation;

Figure 2 is a flow diagram of a method of previewing videos according to one implementation; and

Figure 3 is another schematic representation of an electronic device for previewing videos according to one implementation.

### DESCRIPTION OF DRAWINGS

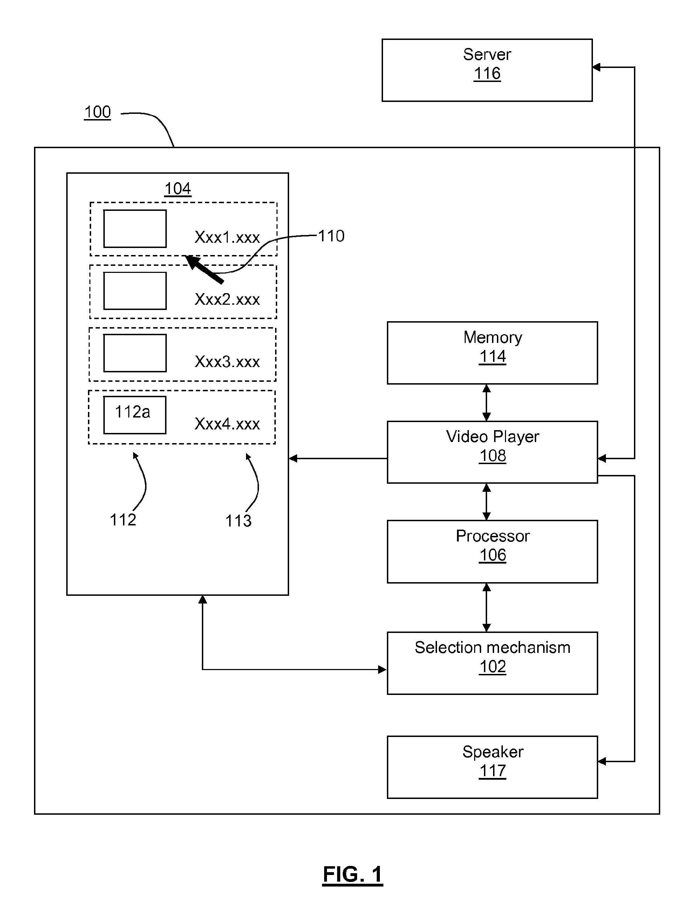

Figure 1 is a schematic representation of an electronic device for previewing videos according to one implementation. Electronic devices include a wide range of devices, such as mobile phones, smart phones, personal digital assistants (PDAs), personal or desktop computers, notebooks, laptops, digital audio/video players, digital video recorders, tablet computers, and so on.

On some of these electronic devices, particular computer resources, such as memory capacity, processing power and screen space, may be more limited than on other devices. A portable smartphone, for example, may have a smaller display and less memory capacity than a personal computer, which may have a larger display and more memory.

The concepts as described herein are not limited to any particular kind of electronic device, but are generally suitable for use on various electronic devices with differing computer resources.

In some implementations, as shown in Figure 1 for example, an electronic device 100 can include a selection mechanism 102, a display 104, a processor 106 and a video player 108.

The selection mechanism 102 may be generally adapted for moving a cursor 110. In some implementations, the selection mechanism 102 may be an optical or mechanical device for sensing a user input, for example a mouse, a touch screen display, a track ball, a trackwheel, a track pad or optical joystick, or another similar device, that enables a user to point to or select an item (or both) on the display 104 using the selection mechanism 102.

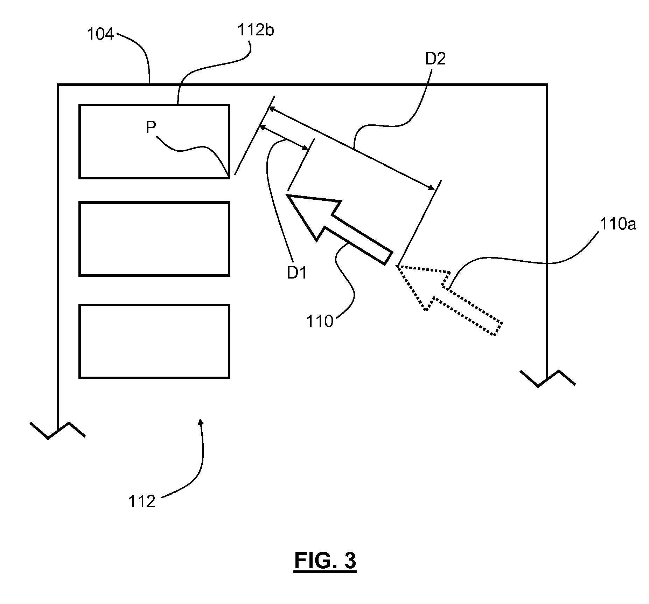

In some implementations, the cursor 110 may include any indicator visible on the display 104. For example, the cursor 110 may include an arrow as shown in Figures 1 and 3. In other examples, the cursor 110 could be manifested as highlighting of an item (such as providing a highlighted box around a thumbnail or an icon), as a graphical representation of a "hand", "wand", "arrow", or another pointer, or any other graphical indicator for indicating which item is being selected, pointed to, subject to manipulation, or otherwise being indicated on the display 104.

In various implementations, the display 104 may consist for example of a Liquid Crystal Display (LCD), a Cathode Ray Tube (CRT) display, a plasma display panel, a projection unit, an Organic Light-Emitting Diode (OLED) or a Surface Electron Emitter Display (SED). Generally, the display 104 may communicate with the processor 106 using a proprietary or a standardized protocol.

The display 104 is generally adapted for displaying or presenting the cursor 110 and for displaying or presenting a graphic representation corresponding to a video. In some cases, the graphic representation may include a still image. The graphic representation may also include other elements, such as text (e.g. a file name).

The graphic representation is typically presented at some place or location on the display 104. That is, the graphical representation typically occupies at least part of the area of displayed information. In some cases, information in addition to the graphic representation may also be presented on the display 104 at the same time as the graphic representation.

The processor 106 communicates with the display 104, the selection mechanism 102 and the video player 108 so as to control operation of the electronic device 100. In particular, the processor 106 detects presence of the cursor 110 in a vicinity of a graphic representation 112 on the display 104.

The cursor 110 may be "in the vicinity" of the graphic representation 112 depending on various criteria. For example, the cursor 110 may be "in the vicinity" when the cursor 110 is in the same place on the display 104 as is the graphic representation 112 (e.g. the cursor 110 may be perceived to be floating "over" the graphic representation 112).

In other implementations, the cursor 110 may be "in the vicinity" of the graphic representation 112 when the cursor is within a particular distance (such as a fixed number of pixels or a fixed linear distance, e.g. 1 mm) from the graphic representation 112 or at least a portion of the graphic representation 112 (e.g. an edge of the graphic representation 112).

In another example, the cursor 110 may be "in the vicinity" when the cursor 110 is a variable distance from the graphic representation 112. For example, the variable distance may be determined based on context, such as the speed or relative position of the cursor 110.

In yet another variation, the cursor 110 may also be "in the vicinity" of a particular graphic representation when the cursor 110 is closer to that particular graphic representation than to one or more other graphic representations.

In some implementations, the processor 106 may be a microprocessor. In some implementations, the processor 106 may be a Field Programmable Gate Array (FPGA). In some implementations, the processor 106 may be a Central Processing Unit (CPU).

Figure 1 depicts four graphic representations 112. For purposes of explanation, each of the graphic representations 112 may be a still picture thumbnail corresponding to a different video (and which may be stored in memory 114). The graphic representations 112 may include a thumbnail or an icon 112a. In some implementations, the thumbnail or icon 112a may consist of a frame selected from the corresponding video.

The graphic representations 112 may, but need not, include some or all of the associated metadata (indicated generally as 113), such as a filename, a date of creation, size information, author information, geographic information relevant to the multimedia data, and so on.

It may be noted that Figure 1 is a conceptual or schematic diagram, and that one or more of the components shown therein may be combined into one or more physical electronic components (e.g. one or more hardware components).

For example, in some implementations the video player 108, processor 106 and memory 114 may be embodied in circuitry on a single physical chip.

Furthermore, the concepts described herein are not limited to the specific interactions depicted in Figure 1. For example, the processor 106 may in some implementations detect the presence of the cursor 110 in the vicinity of any graphic representations 112 via interaction with the display 104 directly, rather than through another element (e.g. through the selection mechanism 102).

Generally, the video player 108 is adapted for communicating with the processor 106, the display 104, a memory 114, and a server 116. In some implementations, the video player may communicate directly or indirectly with the memory 114 and the server 116.

In some cases, the video player 108 may include software that is proprietary or standardized. For example, in some implementations the video player 108 could include video players such as: FLV Player™, Kaffeine™, KPlayer™, LCPlayer™, Light Alloy™, MovistT™, Nemesis Player™, QuickTime™, RealPlayer™, Windows Media Player™, or device specific video players such as for example Blackberry™ video players.

In some implementations, the video player 108 may (but need not) include or be included in a full-featured multimedia application. For example, a full-featured multimedia application may be capable of performing various other functions such as providing music, presenting games to be played on the electronic device 100, allowing web browsing such as to download or access media content, etc.

Generally speaking, the video player 108 receives as input multimedia data that includes video data, and which may also include other types of multimedia data (such as audio data). The video player 108 then generates as output a video that can be presented on the display 104. The video player 108 may also generate other types of output, such as audio associated with the video. In some implementations, the audio may be presented using a speaker 117 or another suitable audio output device.

When the video player generates such output, the video player is "playing the video." Although depicted for clarity in Figure 1 as a separate functional element, the video player 108 may be embodied as a combination of other structural elements, with or without separate hardware.

The video player 108 may, for example, include one or more sets of instructions stored in memory 114 and executable by the processor 106, and have no physical structure apart from those elements. In other implementations, the video player 108 may have a structure that is physically distinct from the processor 106 and the memory 114 (e.g. the video player 108 could reside in a dedicated video card).

In some implementations, whether the video player 108 is a distinct physical element or not, the video player 108 plays the video under the control of the processor 106. In effect, the processor 106 may play the video using the video player 108.

The video player 108 is adapted for playing the video corresponding to the graphic representation that the cursor 110 is "in a vicinity" of. The video player 108 may also play corresponding audio.

In some implementations, the video player 108 may be "installed" before the video player 108 can play a video. Installation typically involves making at least some video playing functions active, and may involve moving or otherwise making executable instructions readily accessible to the processor 106 (e.g. moving instructions into high-speed memory (e.g. RAM or cache memory) from other slower memory (e.g. flash memory or a hard drive).

In some implementations, installation of a video player 108 takes less time and consumes fewer resources than launching of a full-featured media application.

In general, once the video player 108 is installed, the video player 108 can play any number of videos, and the video player 108 may not need to be re-installed with each video played.

In some implementations, when the processor 106 detects the presence of the cursor 110 in the vicinity of a graphic representation 112, the processor 106 may install the video player 108. For purposes of illustration, it will be assumed that the video player 108 has been installed in such a manner as to play a video in the area on the display 104. In some implementations, the processor 106 may install the video player 108 without the cursor 110 being used to "click" the graphic representation 112.

After the processor 106 detects the presence of the cursor 110 in the vicinity of a graphic representation 112, the video player 108 fetches multimedia data representing the video corresponding to that graphic representation 112. This data may be fetched from the local memory 114 or from remote memory such as on a server 116.

In some implementations, the local memory 114 may for example be a hard drive, a solid state drive, a memory card such as a PC Card™ , Compact Flash™, SmartMedia™, Memory Stick™, a Universal Flash Storage, or another type of memory that can be used by the electronic device 100 for storing videos.

The server 116 may be accessed directly or indirectly over a data connection such as over an intranet, an extranet or Internet (not shown).

In some implementations, the electronic device 100 may connect to the server 116 electronically using a wired connection or a wireless connection, or both.

In some implementations, the fetched multimedia data is played by the video player 108 in the same place on the display 104 that was occupied by the graphic representation 112. In effect, the thumbnail or the icon 112, which had been a still image, can become animated when the cursor 110 is in the vicinity. In place of the thumbnail, some or all of the video can be played. In some implementations, some or all of the video can be played without the cursor 110 being used to "click" the graphic representation 112.

In some implementations, the video may be larger than the still graphic representation 112, taking up more space on the display 104 than did the graphic representation 112. In such implementations, the video may extend beyond one or more edges of the boundary of the graphic representation 112. In other implementations the playing video may be smaller than the still graphic representation 112. In some such implementations, the video may be located entirely within the boundary of the graphic representation 112. In other such implementations, the video may extend beyond one or more edges of the boundary of the graphic representation.

In other implementations, the playing video may be located at a different location than the location of the graphic representation 112.

In some implementations, the playing video may be substantially the same size as the graphic representation 112.

In some implementations, the playing video and the still graphic representation 112 may have, but need not have, identical aspect ratios.

In some implementations, the playing video, although occupying at least part of the space on the display 104 occupied by the graphic representation 112, may be offset from the graphic representation 112.

In some implementations, while the video is playing, the processor 106 continues to detect for displacement of the cursor 110. If the cursor 110 is moved away from the vicinity of the graphic representation 112, the processor 106 may instruct the video player 108 to discontinue playing the video. In some implementations, the processor 106 may instruct the video player 108 to discontinue playing the video without the cursor 110 being used to "click" (either on the graphic representation 112 or at another location).

As shown in Figure 3, in one implementation the cursor 110 may initially be in the vicinity of the graphic representation 112b. As shown, the cursor 110 is shaped as an arrow, and a tip of the arrow of the cursor 110 is located at a first distance D1 from a point P on the graphic representation 112b.

As the cursor 110 is moved away from the graphic representation 112b (e.g. to position 110a), the tip of the arrow is located at a second distance D2 from the point P on the graphic representation 112b. Accordingly, the processor 106 may instruct the video player 108 to discontinue playing the video.

In some implementations, play may be discontinued when the second distance D2 is greater than the first distance D1 by some particular amount (e.g. more than 10% greater than D1). In other implementations, play may be discontinued when the second distance D2 exceeds some threshold distance (e.g. it may in some examples be that the cursor 110 has to be both moved away from the graphic representation 112b and moved away to at least a certain particular distance (e.g. 1 mm) before play of the video is discontinued).

In some implementations, the first distance D1 and second distance D2 may be determined based on the point P being on an edge of the boundary of the graphic representation 112b (as shown in Figure 3). In other implementations, the point P may be at other locations (e.g. the point P may be at or near the center of the graphic representation 112b).

In one implementation, the processor 106 may instruct the video player 108 to return to the original graphic representation 112 when play of the video is discontinued.

In other implementations, the processor 106 may instruct the video player 108 to freeze the video when play of the video is discontinued. In some cases, the "frozen" image may become a new still graphic representation 112. In effect, the new graphic representation may depict where the video was interrupted.

In some implementations, the processor 106 may continue to detect movement of the cursor 110 after play of the video is discontinued. Subsequently, when the processor 106 detects the presence of the cursor 110 once again in the vicinity of a graphic representation 112 that depicts a video that was previously frozen, the processor 106 may instruct the video player 108 to resume playing the video from the frame where the video was previously frozen. For example, as shown in Figure 3, the cursor 110 may be moved from the position 110a (at the second distance D2) back towards the first distance D1 to resume playback of the video. The video player 108 then receives instruction from the processor 106, and may continue playing the video from the frame where the video was frozen.

In some implementations, playing of the video may resume after optionally awaiting a particular or predetermined delay period. In some implementations, the delay period may be customizable.

Thus, the electronic device 100 may allow for automatic previewing of videos, freezing of videos during preview, and continuing or resuming video playing after the videos have been frozen.

In some implementations, the user may elect to select the video using the selection mechanism 102, thereby obtaining a larger, more detailed or otherwise more desirable rendition of the video than offered by the preview.

In some implementations, selecting the video (e.g. by using the cursor 110 to click onto the video) may cause the processor 106 to launch a different media application to play the video (and which may be a full-featured media player).

In some implementations, the selected video may be selected without launching the media application. In some variations, the user may use the selection mechanism 102 to move the graphic representation around on the display 104. While the graphic representation is being moved on the display 104 via the selection mechanism 102, the graphic representation may comprise a still image (such as a frame from the frozen video) or the playing video.

In some implementations, a user may perceive that moving the cursor in the vicinity of the graphic representation a first time causes the video to play, that moving the cursor away from the graphic representation causes the video to freeze (with the graphic representation now comprising a still frame of the frozen video), and that moving the cursor in the vicinity of the graphic representation a second time causes the video to play from the point where the video had been frozen.

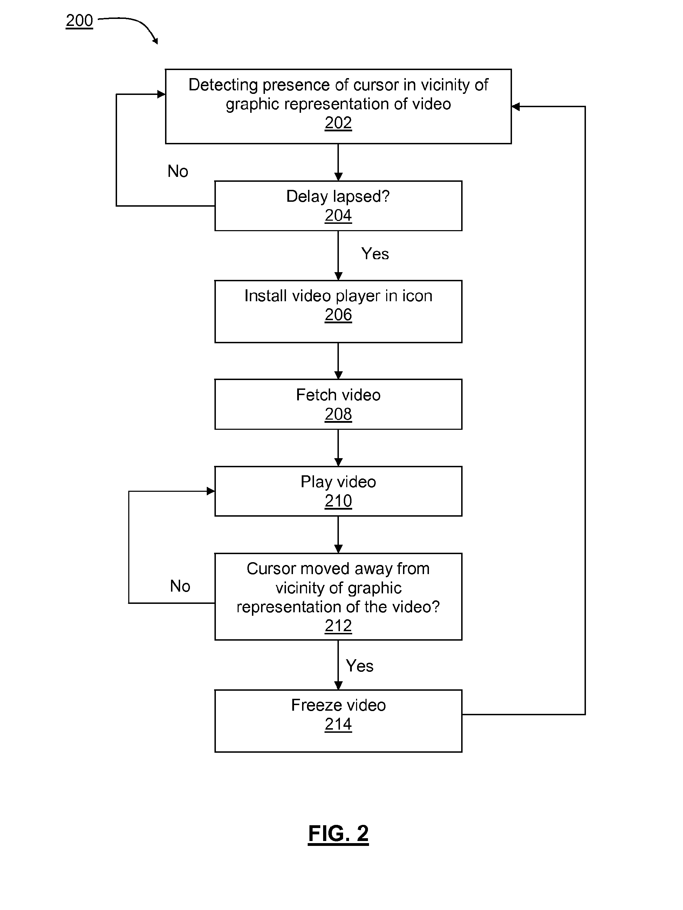

Reference is now made to Figure 2, which depicts a flow diagram or flow chart of a method 200 of previewing videos according to another implementation.

The method 200 starts with detecting presence 202 of the cursor 110 in vicinity of one or more graphic representations 112 corresponding to a video on the display 104.

Upon detection of the presence of the cursor 110 in the vicinity of one of the graphic representations 112 on the display 104, the processor 106 may await a predetermined period of time, either pre-configured or customized by a user, before proceeding. This waiting period is depicted as an optional delay period 204.

Upon lapsing of the delay 204 (if any), in some implementations the method 200 may proceed by installing 206 the video player 108. In the event that the video player 108 has already been installed, the video player need not bebut may be-installed again.

The video player 108 fetches 208 data corresponding to the video (e.g. from the memory 114 or the server 116).

The video player 108 plays 210 the video (in some cases in substantially the same place on the display 104 occupied by the graphic representation 112).

While the video is played, the processor 106 may continue to detect the position movement of the cursor 110 (or both), so as to detect displacement 212 of the cursor 110 away from the vicinity of the graphic representation 112.

Upon detection of the displacement of the cursor 110 away from the graphic representation of the video being played, the processor 106 may instruct the video player 108 to freeze 214 the video.

The processor 106 may then return to detecting 202 the position or movement of the cursor 110 (or both).

In subsequent executions, when the processor 106 detects the presence of the cursor 110 in the vicinity of the graphic representation 112, installing the video player 206 and fetching the data 208 may be unnecessary or undesirable, and one or more may be skipped.

In some implementations, the video may be played 210, with the playing including resuming the video from the frame where the video was previously frozen.

As above, in some implementations a user may perceive that moving the cursor in the vicinity of the graphic representation a first time causes the video to play, that moving the cursor away from the graphic representation causes the video to freeze (with the graphic representation now comprising a still frame of the frozen video), and that moving the cursor in the vicinity of the graphic representation a second time causes the video to resume play from the point where the video had been frozen.

The above concepts may bring about one or more advantages. In some implementations, the devices and techniques described herein enable video previewing without launching of a media application. Previewing can be faster and consume fewer resources (such as less memory, less space on the screen, less processor power) than launching of the media application.

In some implementations, the devices and techniques described herein may allow a video to be played without selecting or "clicking" on the video.

Also, because some implementations involve displaying the animated preview video in less space than the full display, the user may be presented with other information on the display in addition to the animated video preview (e.g. additional metadata may be presented).

Furthermore, according to some implementations, a user can (at a glance preview a number of videos. The previewing provides an efficient tool to quickly identify videos or portions thereof, because the animated previews may be more representative than a still picture.

The foregoing aspects of the method and the electronic device are provided for exemplary purposes only. Those skilled in the art will recognize that various changes may be made thereto without departing from the spirit and scope of the method and the electronic device as defined by the appended claims.

## Claims

1. A method (200) comprising:
presenting a graphic representation (112) corresponding to a video on a display (104);
detecting a presence of a cursor (110) in a vicinity of the graphic representation (112) (202); and
playing the video (210).

2. The method (200) of claim 1, further comprising, after the detection of the presence of the cursor (110) in the vicinity of the graphic representation (112) (202), waiting a delay period before playing the video (210).

3. The method (200) of claim 1 or 2, wherein presenting the graphic representation (112) on the display (104) comprises:
presenting the graphic representation (112) at a place on the display (104);
wherein playing the video (210) comprises playing the video in substantially the same place on the display (104).

4. The method (200) of any preceding claim, wherein playing the video (210) comprises playing corresponding audio.

5. The method (200) of any preceding claim, further comprising:
detecting displacement of the cursor (110) away from the graphic representation (112) (212); and
freezing the video (214).

6. The method (200) of claim 5, wherein detecting the presence of the cursor (210) in a vicinity of the graphic representation (112) (202) comprises detecting the presence of the cursor (110) in a vicinity of the graphic representation (112) a first time, the method further comprising:
detecting a presence of the cursor (110) in a vicinity of the graphic representation a second time (112); and
upon detecting the presence of the cursor (110) in vicinity of the graphic representation (112) the second time, playing the video from the point where the video had been frozen.

7. The method (200) of any preceding claim, further comprising installing a video player (108) (206) before playing the video (210).

8. The method (200) of any preceding claim, further comprising:
receiving an election to select the video; and
launching a media application in response to the election.

9. An electronic device (100) comprising:
a display (104) adapted to present a cursor (110) and a graphic representation (112) corresponding to a video;
a selection mechanism (102) adapted to move the cursor (110) on the display (104); and
a processor (106) adapted to detect a presence of the cursor (110) in a vicinity of the graphic representation (112) on the display (104);
wherein the processor (106) is further adapted to, upon detection of the presence of the cursor (110) in the vicinity of the graphic representation (112) on the display (104), play the video with a video player (108).

10. The electronic device of claim 9, wherein the processor is further adapted to:
detect the presence of the cursor (110) in a vicinity of the graphic representation (112) a first time;
upon detection of the presence of the cursor in the vicinity of the graphic representation (112) the first time, play the video with a video player (108);
detect displacement of the cursor (110) away from the graphic representation (112), and in response freeze the video;
detect the presence of the cursor (110) in a vicinity of the graphic representation (112) a second time; and
upon detecting the presence of the cursor (110) in vicinity of the graphic representation (112) the second time, play the video from the point where the video had been frozen.

11. The electronic device of claim 9 or 10, further comprising:
a memory (114) adapted to store instructions executable by the processor (106).

12. The electronic device of claim 11, wherein the memory (114) is further adapted to store multimedia data.

13. The electronic device of any one of claims 10 to 12, further comprising a speaker (117) adapted to present audio associated with the video.

14. The electronic device of claim 9, wherein the processor (106) is further configured to:
detect displacement of the cursor (110) away from the graphic representation (112); and
freeze the video.

15. The electronic device of claim 9, wherein detecting the presence of the cursor (110) in a vicinity of the graphic representation (112) comprises detecting the presence of the cursor (110) in a vicinity of the graphic representation (112) a first time, and the processor is further configured to:
detect a presence of the cursor (110) in a vicinity of the graphic representation (112) a second time; and
upon detecting the presence of the cursor (110) in vicinity of the graphic representation (112) the second time, play the video from the point where the video had been frozen.

## Amended claims

### Amended claims in accordance with Rule 137(2) EPC.

**1.** A method (200) for previewing a video, comprising:
presenting a graphic representation (112) corresponding to the video on a display (104);
detecting a presence of a cursor (110) within a first distance (D1) from an edge of the graphic representation (112) (202);
playing the video (210) when the cursor (110) is within the first distance (D1) from the edge of the graphic representation (112);
detecting displacement of the cursor (110) away from the graphic representation (112) (212) beyond a second distance (D2) from the edge of the graphic representation (112); and
freezing the video (214) when the cursor is beyond the second distance (D2).

**2.** The method (200) of claim 1 wherein at least one of the first distance (D1) and the second distance (D2) is a variable distance determined based on the speed and the relative position of the cursor (110) with respect to the graphic representation (112).

**3.** The method (200) of any preceding claim, wherein the second distance (D2) is greater than the first distance (D1).

**4.** The method (200) of claim any preceding claim, the method (200) further comprising, after the detection of the presence of the cursor (110) within the first distance (D1) from the edge of the graphic representation (112) (202), waiting a delay period before playing the video (210).

**5.** The method (200) of any preceding claim, wherein presenting the graphic representation (112) on the display (104) comprises:
presenting the graphic representation (112) at a place on the display (104); and
wherein playing the video (210) comprises playing the video in substantially the same place on the display (104).

**6.** The method (200) of any preceding claim, wherein detecting the presence of the cursor (210) within the first distance (D1) from the edge of the graphic representation (112) (202) comprises detecting the presence of the cursor (110) within the first distance (D1) from the edge of the graphic representation (112) a first time, and the method further comprises:
detecting a presence of the cursor (110) within the first distance (D1) from the edge of the graphic representation a second time (112) after the video has been frozen; and
upon detecting the presence of the cursor (110) within the first distance (D1) from the edge of the graphic representation (112) the second time, playing the video from the point where the video had been frozen.

**7.** The method (200) of any preceding claim, further comprising installing a video player (108) (206) before playing the video (210).

**8.** The method (200) of any preceding claim, further comprising:
receiving an election to select the video; and
launching a media application in response to the election.

**9.** An electronic device (100) adapted for previewing a video, comprising:
a display (104) adapted to present a cursor (110) and a graphic representation (112) corresponding to the video;
a selection mechanism (102) adapted to move the cursor (110) on the display (104); and
a processor (106) adapted to detect a presence of the cursor (110) within a first distance (D1) from an edge of the graphic representation (112) on the display (104);
wherein the processor (106) is further adapted to, upon detection of the presence of the cursor (110) within the first distance (D1) from the edge the graphic representation (112) on the display (104), play the video with a video player (108);
detect displacement of the cursor (110) away from the graphic representation (112) (212) beyond a second distance (D2) from the edge of the graphic representation (112); and
freeze the video (214) when the cursor is beyond the second distance (D2).

**10.** The electronic device (100) of claim 9 wherein at least one of the first distance (D1) and the second distance (D2) is a variable distance determined based on the speed and the relative position of the cursor (110) with respect to the graphic representation (112).

**11.** The electronic device (100) of claim 9 or 10, wherein the second distance (D2) is greater than the first distance (D1).

**12.** The electronic device of any one of claims 9 to 11, wherein the processor is further adapted to:
detect the presence of the cursor (110) within the first distance (D1) from the edge of the graphic representation (112) a first time;
upon detection of the presence of the cursor within the first distance (D1) from the edge of the graphic representation (112) the first time, play the video with a video player (108);
detect the presence of the cursor (110) within the first distance (D1) from the edge of the graphic representation (112) a second time after the video has been frozen; and
upon detecting the presence of the cursor (110) within the first distance (D1) from the edge of the graphic representation (112) the second time, play the video from the point where the video had been frozen.

**13.** The electronic device of any one of claims 9 to 12, further comprising:
a memory (114) adapted to store instructions executable by the processor (106).

**14.** The electronic device of claim 13, wherein the memory (114) is further adapted to store multimedia data.

**15.** The electronic device of any one of claims 9 to 14, further comprising a speaker (117) adapted to present audio associated with the video.
